**Europäisches Patentamt**

**European Patent Office**

**Office européen des brevets**

(19)

(11) Veröffentlichungsnummer: **0 260 289**
**B1**

(12) **EUROPÄISCHE PATENTSCHRIFT**

(45) Veröffentlichungstag der Patentschrift: **23.01.91**

(51) Int. Cl.⁵: **G 06 F 3/12**

(21) Anmeldenummer: **87901473.6**

(22) Anmeldetag: **04.03.87**

(86) Internationale Anmeldenummer:
**PCT/EP87/00127**

(87) Internationale Veröffentlichungsnummer:
**WO 87/05416 11.09.87 Gazette 87/20**

(54) **EINRICHTUNG UND VERFAHREN ZUM SELEKTIVEN DUPLIZIEREN VON ALPHANUMERISCHEN UND/ODER GRAPHISCHEN ZEICHEN.**

(30) Priorität: **08.03.86 DE 3607723**

(43) Veröffentlichungstag der Anmeldung:
**23.03.88 Patentblatt 88/12**

(45) Bekanntmachung des Hinweises auf die
Patenterteilung:
**23.01.91 Patentblatt 91/04**

(84) Benannte Vertragsstaaten:
**AT BE CH DE FR GB IT LI LU NL SE**

(56) Entgegenhaltungen:
**EP-A-0 096 407**
**US-A-4 125 874**

**Patent Abstracts of Japan, vol. 8, no. 202,
(P-300) (1639) 14 September 1984**

(73) Patentinhaber: **GERT FISCHER GMBH**
**Neusser Strasse 56**
**D-4044 Kaarst 1 (DE)**

(72) Erfinder: **FISCHER, Gert**
**Neusser Strasse 56**
**D-4044 Kaarst 1 (DE)**

(74) Vertreter: **Zenz, Joachim Klaus et al**
**Am Ruhrstein 1**
**D-4300 Essen 1 (DE)**

EP 0 260 289 B1

Courier Press, Leamington Spa, England.

**Beschreibung**

Die Erfindung bezieht sich auf eine Einrichtung zum selektiven Duplizieren von alphanumerischen und/oder graphischen Zeichen, die von einem Datenverarbeitungsgerät über ein Datenübertragungskabel an ein Datenausgabegerät, insbesondere einen Drucker, ausgegeben werden. Ferner bezieht sich die Erfindung auf ein Duplizierverfahren unter Verwendung dieser Einrichtung.

Mit zunehmendem Einsatz von Datenverarbeitungssystemen in Büros und Industrieunternehmen wachsen auch die Aufgaben, die Datenverarbeitungssystemen zugewiesen werden oder werden sollen. Für die Textverarbeitung eingesetzte Datenverarbeitungsgeräte, z.B. PC's oder andere EDV-Systeme, werden häufig auch für die Fakturierung und mit Hilfe von Sondersoftware für Spezialaufgaben eingesetzt. Solche für die praxis wichtigen Sonderfunktionen sind z.B. der Etikettendruck, der Ausdruck auf individuelle Formate, Textergänzungen oder Text- bzw. Zeichenauswahl. Der Aufruf eines speziellen Etikettendruckprogramms oder eines Programms zum auszugsweisen Drucken von verschiedenen Formularsätzen bedingt eine Unterbrechung des normalen Arbeitsprogramms der zugehörigen Datenverarbeitungsanlage, kostet also sowohl Maschinenzeit als auch erhöhten Aufwand auf Seiten der Bedienungsperson.

Auch das vollständige Duplizieren von maschinenausgegebenen Texten bereitet häufig Probleme und führt zu nicht unerheblichen Betriebsunterbrechungen. So sind einige Ausgabegeräte, wie Tintenstrahldrucker, Laserdrucker oder Plotter von Haus aus nicht in der Lage, Duplikate des ausgegebenen Originals anzufertigen. Derartigen Ausgabegeräten müssen daher geeignete Kopiergeräte nachgeschaltet werden.

Davon ausgehend liegt der Erfindung die Aufgabe zugrunde, eine Einrichtung und ein Verfahren zum Duplizieren von alphanumerischen und/oder graphischen Zeichen zur Verfügung zu stellen, die ohne Sondersoftware im Datenverarbeitungsgerät auskommen und beliebigen Datenverarbeitungsgeräten ohne Beeinträchtigung des Betriebs zugeordnet werden können.

Die Erfindung löst diese Aufgabe bei einer Einrichtung der oben genannten Art dadurch, daß ein programmierbares Steuergerät über eine Anzapfung parallel zu dem systemeigenen Datenausgabegerät an das Datenübertragungskabel derart angekoppelt ist, daß es die von dem Datenverarbeitungsgerät auf das Datenübertragungskabel ausgegebenen Daten simultan zu dem systemeigenen Datenausgabegerät aufnimmt, daß das Steuergerät wenigstens einen Ausgang zur Ansteuerung wenigstens eines duplizierenden weiteren Datenausgabegeräts aufweist und über einen geräteeigenen Umschalter selektiv auf Programmierbetrieb und Ausgabebetrieb umschaltbar ist. Verfahrensmäßig ist die Erfindung dadurch gekennzeichnet, daß funktions- und/oder systembezogene Programminformationen für das programmierbare Steuergerät in das Datenverarbeitungsgerät eingegeben und über das Datenübertragungskabel an das Steuergerät ausgegeben werden, während sich das Steuergerät im Programmierbetrieb befindet, daß das Steuergerät danach in den Ausgabebetrieb umgeschaltet wird, worauf die vom Datenverarbeitungsgerät an das systemeigene Ausgabegerät übertragenen Daten simultan vom Steuergerät gelesen, in Abhängigkeit von im Programmierbetrieb eingegebenen Informationen weiterverarbeitet und selektiv und vorzugsweise zeitverschoben an das wenigstens eine weitere Datenausgabegerät ausgegeben werden.

Dem Steuergerät werden zu Beginn seines Einsatzes die anwendungs- und systemspezifischen Merkmale von dem Datenverarbeitungsgerät über dessen Drucker-Ausgangsport eingegeben. Ebenfalls durch das Datenverarbeitungsgerät kann eine beliebige Software, z.B. eine bestimmte Zeichenfolge in dem Anschriftenfeld zum Erkennen einer Anschriftenposition, dem Steuergerät eingegeben werden. Durch Synchronmarken kann eine beliebige Textstelle für den Ausdruck markiert werden, z.B. eine Rechnungssumme. In dieser Programmier- oder Lernphase des Geräts können aber auch mehrere Synchronmarken gesetzt werden, z.B. für die Anschrift, den Absender und die Rechnungssumme. Zusätzlich können dem Gerät Informationen über die Formularaufteilung, z.B. eine besondere Anordnung für einen Paketaufkleber, und das Druckbild (Breit-, Fettschrift, Schrifthöhe o.dgl.) eingegeben werden.

Nach Beendigung dieser nur beim Neuanschluß des Steuergeräts notwendigen Lernphase wird das Steuergerät auf den normalen Ausgabebetrieb umgeschaltet. In diesem normalen Ausgabebetrieb liest das Steuergerät alle über das Datenübertragungskabel dem systemeigenen Ausgabegerät, z.B. dem systemeigenen Drucker zugeführten Informationen mit. Nach den im programmteil des Steuergeräts gespeicherten Programminformationen können die Anschriften- und/oder Absenderdaten aus dem Gesamttext selektiert und auf Adreßetiketten und/oder gesondert auf Paketaufklebern in wenigstens einem weiteren Datenausgabegerät gedruckt werden.

Vorzugsweise hat das Steuergerät einen Programmspeicher zur Aufnahme von durch das Datenverarbeitungsgerät ausgegebenen Duplizierprogramminformationen und einen Pufferspeicher zur Aufnahme und Pufferung der alphanumerischen und/oder graphischen Zeichen. Die vom Datenverarbeitungsgerät über das Datenübertragungskabel ausgegebenen Daten werden dabei in Abhängigkeit von der Stellung des Umschalters in den Programmspeicher oder in den Pufferspeicher geleitet.

Die speziellen Ausgabefunktionen, z.B. Selektieren und Duplizieren von Texten und Textteilen, der Ausdruck auf individuelle Formate, die Ergänzung des Textes oder der Textteile mit dem Absender für den Etikettendruck, die Anfertigung mehrerer Duplikate von Texten usw. können dadurch am Steuergerät selbst eingestellt werden, daß dem Steuergerät ein Codierschalter zur Auswahl vorgegebener unterschiedlicher Ausgabefunktionen zugeordnet ist.

Eine universelle Adaptionsfähigkeit der erfindungsgemäßen Dupliziereinrichtung an beliebige systemeigene Ausgabegeräte kann dadurch erreicht werden, daß das Steuergerät einen Stringconverter zum Anpassen der dem Steuergerät nachgeschalteten Ausgabegeräte an das parallele systemeigene Datenausgabegerät aufweist.

Vorzugsweise ist das Steuergerät mit mehreren parallelen Ausgangsports zur Bedienung mehrerer Ausgabegeräte versehen, wobei die Ausgangsports durch einen von außen betätigbaren Schalter einzeln aktivierbar sind.

Dem erfindungsgemäß vorgesehenen Steuergerät können beliebige Ausgabegeräte, wie Matrixdrucker, Typenraddrucker, Typenkorbdrucker, Tintenstrahldrucker, Thermodrucker, Laserdrucker, Plotter aber auch Speichergeräte, Diskettenstationen oder Festplattenspeicher nachgeordnet werden. Die Anpassung der Gesamteinrichtung, bestehend aus dem programmierbaren Steuergerät und dem oder den Ausgabeeinheiten kann ebenso wie bei herkömmlichen Ausgabegeräten im Zuge der Lern- oder Programmierphase über das EDV-System selbst vorgenommen werden.

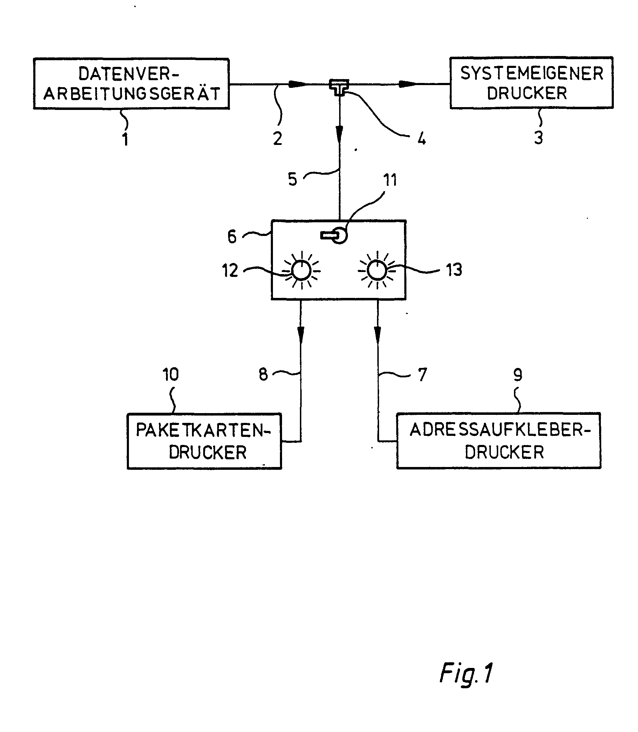

Im folgenden wird die Erfindung anhand der Zeichnung näher erläutert, die ein Blockschaltbild eines Ausführungsbeispiels der erfindungsgemäßen Einrichtung in Zuordnung zu einem aus einem Datenverarbeitungsgerät und einem systemeigenen Ausgabegerät bestehenden System darstellt.

Gemäß dem in der Zeichnung dargestellten Blockschaltbild ist an ein Datenverarbeitungsgerät 1, das beispielsweise ein PC oder ein anderes EDV-System sein kann, über ein Druckerkabel 2 ein systemeigener Drucker 3 angeschaltet. Das Druckerkabel ist mit einer Anzapfung 4 versehen, von der eine Abzweigleitung 5 zu einem mit einem Mikroprozessorsystem ausgestatteten programmierbaren Steuergerät 6 führt. Das Steuergerät 6 erhält über die Anzapfung 4 und die parallele Abzweigleitung 5 simultan alle Informationen, die über den Ausgangsport des Datenverarbeitungsgeräts 1 dem systemeigenen Drucker 3 zugeführt werden.

Das Steuergerät 6 steuert in dem dargestellten Ausführungsbeispiel über getrennte Ausgabeports und daran angeschlossene Datenübertragungskabel 7 und 8 zwei Druckstationen 9 und 10, von denen die eine (9) als Adreßaufkleber-Drucker und die andere (10) als Paketkarten-Drucker vorgesehen ist.

An dem Steuergerät 6 ist ein von außen betätigbarer, hier als Kippschalter ausgebildeter Umschalter 11 vorgesehen. Mit diesem Umschalter läßt sich das Steuergerät auf Programmier- oder Lernbetrieb (L) oder auf Ausgabebetrieb (B) einstellen. In der Stellung L werden die von dem Datenverarbeitungsgerät 1 über das Druckerkabel 2 und die Abzweigleitung 5 ausgegebenen Daten in einen in der Zeichnung nicht dargestellten Programmspeicher des Steuergeräts 6 geleitet; in der Stellung B des Umschalters 11 werden diese Daten in einen ebenfalls in der Zeichnung nicht dargestellten Pufferspeicher des Steuergeräts geleitetIm Programmier- bzw. Lernbetrieb, der an sich nur bei erstmaliger Ankopplung des Steuergeräts 6 über die Parallelanzapfung 4 an das Datenverarbeitungsgerät 1 eingeschaltet zu werden braucht, erfolgt die Speicherung einer beliebigen Software einerseits zur Anpassung des Steuergeräts bzw. der nachgeordneten Druckstationen an das Datenverarbeitungsgerät 1 und andererseits zur Eingabe beliebiger Synchronmarken für die Kennzeichnung der vorzunehmenden Selektionen beim Druck. Im dargestellten Ausführungsbeispiel werden die Anschriftenpositionen sowie die für die andere Anordnung des Paketkartendrucks erforderlichen Informationen eingegeben.

Nach dieser erstmaligen Programmier- oder Lernphase des Steuergeräts, bei der dessen Ausgabefunktionen unterbrochen sind, wird der Umschalter 11 in die Schalterstellung B umgelegt, und das Steuergerät 6 arbeitet jetzt nach den in der Lernphase definierten Einstellungen.

In dem dargestellten Ausführungsbeispiel sind zwei Drehschalter 12 und 13 vorgesehen, die in jeweiliger Zuordnung zur einem der Ausgangsports 7 bzw. 8 eine geräteeigene Einstellung der auszuführenden Funktionen ermöglichen. Über die Drehschalter 12 und 13 können sowohl die zugehörigen Ausgangsports 7 bzw. 8 aktiviert als auch konkrete Druckfunktionen der nachgeordneten Ausgabegeräte 9 und 10 eingestellt werden. Hierzu gehören das Selektieren und Duplizieren von Texten und Textteilen, der Ausdruck auf unterschiedliche Formate, z.B. für den Etikettendruck oder den Paketkartendruck, die Auswahl einer oder mehrerer Duplikate o.dgl.. Diese Einstellungsmöglichkeiten über die Codierschalter 12 und 13 können anwenderorientiert und gegebenenfalls bereits herstellerseitig fest vorprogrammiert sein.

Die Ansteuerung der duplizierenden Ausgabegeräte 9 und 10, die auch als Plotter zum Duplizieren graphischer Zeichen ausgebildet sein können, geschieht in üblicher Weise ähnlich der Ansteuerung des systemeigenen Druckers 3 durch das Datenverarbeitungsgerät. Irgendwelche Beschränkungen gibt es nicht. Da die laufenden Informationen vom Druckerverbindungskabel 2 parallel zum systemeigenen Drucker 3 abgezweigt werden, kann die beschriebene Einrichtung zum selektiven Duplizieren ohne jegliche Beeinträchtigung des normalen Datenstroms zwischen dem Datenverarbeitungsgerät 1 und dem systemeigenen Ausgabegerät 3 betrieben werden. Die Informationen werden von dem Datenübertragungskabel 2 durch das Steuergerät 6 simultan mitgelesen und in der Regel nach Zwischenspeicherung in einer in der Lernphase definierten Weise auf die nachgeordneten Ausgabegeräte 9, 10 usw. projiziert.

## Patentansprüche

1. Einrichtung zum selektiven Duplizieren von alphanumerischen und/oder graphischen Zeichen, die von einem Datenverarbeitungsgerät (1) über ein Datenübertragungskabel (2) an ein Datenausgabegerät (3), insbesondere einen Drucker, ausgegeben werden

dadurch gekennzeichnet, daß ein programmierbares Steuergerät (6) parallel zu genanntem Datenausgabegerät (3) an das Datenübertragungskabel (2) derart angekoppelt ist, daß es die von dem Datenverarbeitungsgerät (1) auf das Datenübertragungskabel ausgegebenen Daten simultan mit dem genannten Datenausgabegerät aufnimmt, daß das Steuergerät (6) wenigstens einen Ausgang (7, 8) zur Ansteuerungt Ausgang (7, 8) zur Ansteuerung wenigstens eines duplizierenden weiteren Datenausgabegeräts (9, 10) aufweist und über einen geräteeigenen Umschalter (11) selektiv auf Programmierbetrieb (L) und Ausgabebetrieb (B) umschaltbar ist.

2. Einrichtung nach Anspruch 1, dadurch gekennzeichnet, daß das Steuergerät (6) einen Programmspeicher zur Aufnahme von Duplizierprogramminformationen, die über das Datenübertragungskabel (2) von dem Datenverarbeitungsgerät (1) ausgegeben werden, und einen Pufferspeicher zur Aufnahme und Pufferung der alphanumerischen und/oder graphischen Zeichen aufweist.

3. Einrichtung nach Anspruch 2, dadurch gekennzeichnet, daß vom Datenverarbeitungsgerät (1) über das Datenübertragungskabel (2) ausgegebene Daten in Abhängigkeit von der Stellung des Umschalters (11) in den Programmspeicher oder in den Pufferspeicher des Steuergeräts (6) geleitet werden.

4. Einrichtung nach einem der Ansprüche 1 bis 3, dadurch gekennzeichnet, daß dem Steuergerät (6) wenigstens ein Codierschalter (12, 13) zur Auswahl vorgegebener unterschiedlicher Ausgabefunktionen, z.B. Mehrfachduplizierung, Ausdruck auf individuelle Formate o.dgl. zugeordnet ist.

5. Einrichtung nach einem der Ansprüche 1 bis 4, dadurch gekennzeichnet, daß das Steuergerät (6) einen Stringconverter zum Anpassen der dem Steuergerät nachgeschalteten Ausgabegeräte (9, 10) an das parallele systemeigene Datenausgabegerät (3) aufweist.

6. Einrichtung nach einem der Ansprüche 1 bis 5, dadurch gekennzeichnet, daß das programmierbare Steuergerät mit mehreren parallelen Ausgangsports (7, 8) zur Bedienung mehrerer Ausgabegeräte (9, 10) versehen ist und daß die Ausgangsports durch wenigstens einen von außen betätigbaren Schalter (12, 13) aktivierbar sind.

7. Einrichtung nach den Ansprüchen 4 und 6, dadurch gekennzeichnet, daß jedem Ausgangsport (7, 8) ein Codierschalter (12, 13) zugeordnet ist.

8. Verfahren zum selektiven Duplizieren von alphanumerischen und/oder graphischen Zeichen unter Verwendung der Einrichtung nach einem der Ansprüche 1 bis 7, dadurch gekennzeichnet, daß funktions- und/oder systembezogene Programminformationen für das programmierbare Steuergerät in das Datenverarbeitungsgerät eingegeben und über das Datenübertragungskabel an das Steuergerät ausgegeben werden, während sich das Steuergerät im Programmierbetrieb befindet, daß das Steuergerät danach in den Ausgabebetrieb umgeschaltet wird, die von dem Datenverarbeitungsgerät an das systemeigene Ausgabegerät übertragenen Daten simultan vom Steuergerät gelesen, in Abhängigkeit von den im Programmierbetrieb eingegebenen Informationen weiterverarbeitet und selektiv und vorzugsweise zeitverschoben an das wenigstens eine weitere Datenausgabegerät ausgegeben werden.

9. Verfahren nach Anspruch 8, dadurch gekennzeichnet, daß bei Verwendung unterschiedlicher Ausgabegeräte ein Anpaßprogramm über das Datenverarbeitungsgerät in das im Programmierbetrieb befindliche Steuergerät eingegeben wird.

10. Verfahren nach Anspruch 8 oder 9, dadurch gekennzeichnet, daß systemunabhängige Duplizierfunktionen direkt in das Steuergerät eingegeben werden.

11. Verfahren nach einem der Ansprüche 8 bis 10, dadurch gekennzeichnet, daß die über das Datenübertragungskabel simultan eingelesenen Informationen vor der Ausgabe im Steuergerät zwischengespeichert und in Abhängigkeit von einer im programm vorgegebenen Aktivierungsmarke zu dem wenigstens einen Ausgabegerät selektiv ausgegeben werden.

## Revendications

1. Dispositif pour la copie sélective de signes alphanumériques et/ou graphiques qui sont fournis d'un appareil de traitement de données (1), par l'intermédiaire d'un câble de transmission de données (2), à un appareil de sortie de données (3), en particulier une imprimante, caractérisé par le fait qu'un appareil de commande (6) programmable est accouplé, en parallèle audit appareil de sortie de données (3), au câble de transmission de données (2) de manière qu'il prélève les données sorties sur le câble de transmission de données par l'appareil de traitement de données (1) simultanément avec ledit appareil de sortie de données, que l'appareil de commande (6) possède au moins une sortie pour commander au moins un autre appareil de sortie (9, 10) polycopieur et est commutable sélectivement sur une opération de programmation (L) et une opération de sortie (B) par l'intermédiaire d'un commutateur (11) propre à l'appareil.

2. Dispositif selon la revendication 1, caractérisé par le fait que l'appareil de commande (6) possède une mémoire de programmation pour prélever des informations du programme de copie qui sont sorties de l'appareil de traitement de données (1) par l'intermédiaire du câble de transmission de données (2) et une mémoire tampon pour prélever et mettre en transit les signes alphanumériques et/ou graphiques.

3. Dispositif selon la revendication 2, caractérisé par le fait que des données sorties de l'appareil de

EP 0 260 289 B1

4

traitement de données (1) par l'intermédiaire du câble de transmission de données (2) sont introduites dans la mémoire de programmation ou dans la mémoire tampon de l'appareil de commande (6) en fonction de la position du commutateur (11).

4. Dispositif selon l'une des revendications 1 à 3, caractérisé par le fait qu'à 1'appareil de commande (6) est associé au moins un commutateur de codage (12, 13) pour le choix de différentes fonctions de sortie de données, par exemple, polycopie, impression sur formats individuels et autres.

5. Dispositif selon l'une des revendications 1 à 4, caractérisé par le fait que l'appareil de commande (6) possède un convertisseur de chaîne pour adapter les appareils de sortie de données (9, 10) montées à la suite de l'appareil de commande à l'appareil de sortie de données (3) propre au système, monté en parallèle.

6. Dispositif selon l'une des revendications 1 à 5, caractérisé par le fait que l'appareil de commande programmable est muni de plusieurs sorties (7, 8) en parallèle pour alimenter plusieurs appareils de sortie (9, 10) et que les sorties sont activables par au moins un commutateur (12, 13) actionnable de l'extérieur.

7. Dispositif selon les revendications 4 et 6, caractérisé par le fait qu'à chaque sortie (7, 8) est associé un commutateur de codage (12, 13).

8. Procédé pour la copie sélective de signes alphanumériques et/ou graphiques, en utilisant le dispositif selon l'une des revendication 1 à 7, caractérisé par le fait qu'on introduit dans l'appareil de traitement de données des informations de programmation relatives à une fonction et/ou un système pour l'appareil de commande programmable et on les fournit à l'appareil de commande par le câble de transmission de données, pendant que l'appareil de commande se trouve en marche programme, qu'on commute ensuite l'appareil de commande en marche sortie, les données transmises par l'appareil de traitement de données à l'appareil de sortie propre au système sont lues simultanément par l'appareil de commande, sont encore traitées en fonction des informations introduites en marche programmation et fournies sélectivement, et de préférence décalées dans le temps, à l'un des autres appareils de sortie de données.

9. Procédé selon la revendication 8, caractérisé par le fait qu'en utilisant des appareils de sortie différents, on introduit un programme d'adaptation dans l'appareil de commande, se trouvant en marche programmation, par l'intermédiaire de l'appareil de traitement de données.

10. Procédé selon la revendication 8 ou 9, caractérisé par le fait qu'on introduit directement dans l'appareil de commande des fonctions de copies indépendantes du système.

11. Procédé selon l'une des revendications 8 à 10, caractérisé par le fait qu'on mémorise provisoirement, avant la sortie dans l'appareil de commande, les informations introduites simultanément par l'intermédiaire du câble de transmission de données et on les fournit sélectivement à l'appareil de sortie en fonction d'une marque d'activation prévue dans le programme.

**Claims**

1. Apparatus for selectively duplicating alphanumeric and/or graphic characters which are output from a data processing device (1) via a data transmission cable (2) to a data output device (3), particularly a printer, characterised in that

a programmable control device (6) is coupled to the data transmission cable (2) parallel to the said data output device (3) in such a manner that it receives the data output by the data processing device (1) to the data transmission cable simultaneously with the said data output device, that the control device (6) has at least one output (7, 8) for controlling at least one duplicating further data output device (9, 10) and is selectively switchable via a switch (11) specific to the device to programming operation (L) and output operation (B).

2. Apparatus as claimed in claim 1, characterised in that the control device (6) has a program store for recording duplicating program information, which is output via the data transmission cable (2) from the data processing device (1), and a buffer store for recording and buffering the alphanumeric and/or graphic characters.

3. Apparatus as claimed in claim 2, characterised in that data output from the data processing device (1) via the data transmission cable (2) is fed into the program store or into the buffer store of the control device (6) in dependence on the position of the switch (11).

4. Apparatus as claimed in one of claims 1 to 3, characterised in that at least one coding switch (12, 13) for selecting predetermined different output functions, e.g. multiple duplicating, printing on individual forms or the like, is associated with the control device (6).

5. Apparatus as claimed in one of claims 1 to 4, characterised in that the control device (6) has a string converter for adapting the output devices (9, 10) connected to the control device to the parallel data output device (3) specific to the system.

6. Apparatus as claimed in one of claims 1 to 5, characterised in that the programmable control device is provided with a plurality of parallel output ports (7, 8) for operating a plurality of output devices (9, 10) and that the output ports may be activated by at least one externally actuable switch (12, 13).

7. Apparatus as claimed in claims 4 and 6, characterised in that a coding switch (12, 13) is associated with each output port (7, 8).

8. Method of selectively duplicating alphanumeric and/or graphic characters using the apparatus as claimed in one of claims 1 to 7, characterised in that function or system related program information for the programmable storage device is input into the data processing device and output via the data transmission cable to the control device whilst the control device is in programming operation, that the control device is subsequently switched over into output operation, that the data transferred from the data processing device to the system-specific output device is simultaneously read by the control device, further processed in dependence on the information input in the programming operation and selectively, and preferably with a time shift, output to the at least one further data output device.

9. Method as claimed in claim 8, characterised in that when using different output devices an adaptation program is input via the data processing device into the control device which is in programming operation.

10. Method as claimed in claim 8 or 9, characterised in that the system-independent duplicating functions are input directly into the control device.

11. Method as claimed in one of claims 8 to 10, characterised in that the information which is read simultaneously via the data transmission cable is intermediately stored before output in the control device and selectively output to the at least one output device in dependence on an activating mark predetermined in the program.

| | |
|---|---|
| DATENVER- ARBEITUNGSGERÄT | SYSTEMEIGENER DRUCKER |

1

2

4

3

5

11

6

12

13

10

8

7

9

| |
|---|
| PAKETKARTEN- DRUCKER |

| |
|---|
| ADRESSAUFKLEBER- DRUCKER |

*Fig.1*